# EUROPEAN PATENT SPECIFICATION

(11) **EP 4 025 784 B1**
(45) Date of publication and mention of the grant of the patent: **04.12.2024**
(21) Application number: 20768307.9
(22) Date of filing: 03.09.2020
(51) Int. Cl.: F03D 80/50, E04G 3/30, E04G 3/28

(54) **BLADE ACCESS ARRANGEMENT FOR A ROTOR BLADE OF A WIND POWER PLANT**
SCHAUFELZUGANGSANORDNUNG FÜR EIN ROTORBLATT EINER WINDENERGIEANLAGE
AGENCEMENT D'ACCÈS À UNE PALE DESTINÉ À UNE PALE DE ROTOR D'UNE ÉOLIENNE

(30) Priority: 05.09.2019 DK PA201901053
(43) Date of publication of application: 13.07.2022
(73) Proprietor: PP Energy ApS, 6430 Nordborg (DK)
(72) Inventor: JUNKER, Peter Moos, 6430 Nordborg (DK); MARTENSEN, Lars, 6430 Nordborg (DK); PEDERSEN, Jesper Ankjær, 6430 Nordborg (DK)
(74) Representative: Keil & Schaafhausen Patentanwälte PartGmbB
(86) International application number: PCT/EP2020/074686
(87) International publication number: WO 2021/043946

(56) References cited:
- DE-A1- 102008 019 680
- DE-A1- 102011 100 912
- DE-A1- 102012 001 725
- KR-A- 20140 099 339

## Description

The present invention relates to a blade access arrangement for a rotor blade of a wind power plant having a tower, the arrangement comprising a platform having blade guide means for guiding the platform against the blade and tower guide means for guiding the platform against the tower, wherein the platform is adjustable in an open configuration, in which the blade can enter the blade guide means, and in a closed configuration, in which the platform is guided by the blade, wherein the platform comprises at least two sub-platforms and a linking system linking the sub-platforms together.

Such a blade access arrangement is known, for example, from DE 10 2011 100 912 A1.

A further blade access arrangement is known from WO 2017/215711 A1. An opening is provided in the platform for receiving a blade. In this case, it is necessary to lift the platform into a height below the tip of a downwardly pointing blade and to move the platform to a distance from the tower in which the blade can enter the opening in the platform. This is challenging and time consuming.

DE 10 2008 019 680 A1 shows another blade access arrangement for a rotor blade of a wind power plant having a tower, the arrangement comprising a platform having blade guide means for guiding the platform against the blade and tower guide means for guiding the platform against the tower, wherein the platform is adjustable in an open configuration in which the blade can enter the blade guide means, and in close configuration, in which the platform is guided by the blade. The platform comprises at least two sub-platforms and a linking system linking the sub-platforms together.

DE 10 2012 001 725 A1 shows a climbing robot for masts which can be used in connection with a rotor blade of a wind power plant having a tower. The climb robot comprises climbing means. Furthermore, the robot comprises an enclosure.

The object underlying the invention is to allow a safe access to the blade.

This object is solved with a blade access arrangement as described at the outset in that the platform comprises an enclosure connected to the sub-platforms.

In most wind power plants the tip of a downwardly pointing blade has a larger distance to the tower than the root of the blade. Thus, it is rather difficult to reach the tip of the blade from below. The present blade access arrangement can now be guided along the tower until it reaches a position in which the distance between the blade and the tower is short enough so that the platform can catch the blade from the side. To this end, the platform is adjustable in an open configuration so that the platform can be moved towards the blade until it encloses the blade. Thereafter, the platform can be adjusted in closed configuration, in which the platform is guided by the blade. Once the platform is guided by the blade, it can be moved along the blade so that all areas of the blade can be accessed.

The blade access arrangement enables an inspection of the blade from the tip to the root. The blade access arrangement can easily be switched between being guided by the tower guided means or to be guided by the blade guide means or vice versa. This enables the blade access arrangement to passing obstructions at both blade and tower in a secure manner when the blade access arrangement is lifted or lowered along the longitudinal direction of the tower and or blade. This easy switching between being tower or blade guided enables the blade access arrangement not only to pass obstructions like openings in the tower, connection seams, noise reduction material, sensors etc at both blade and tower but also to avoid that the blade access arrangement contacts weak area or area to be maintained or area which need a drying time after been maintained.

When the platform is adjusted in an open configuration, the sub-platforms are moved apart from each other in order to open the platform so that the blade can be moved into the platform and the blade can be surrounded by the platform.

The enclosure provides the advantage that maintenance can be carried out in poor weather conditions. This improves the safety of maintenance operation and allows time and cost-efficient maintenance. The enclosure enables the time windows for repair to also cover poor weather condition like wind, cold temperature, humidity changes etc. The enclosure can be a full enclosure or a partial enclosure. The enclosure may comprise several segments like walls and roofs. These segments together form an enclosure for the platform. The enclosure can move together with the sub-platforms. The enclosure can hereby automatically follow the change of the platform.

In an embodiment of the invention the sub-platforms are movable with respect to each other keeping an angle between the sub-platforms constant. The linking system forms a movable connection, so that the sub-platforms are still connected, however, can be moved in an open configuration of a platform. During such a movement the sub-platforms do not change their angular alignment.

In an embodiment of the invention at least one of sub-platforms forms a part of the blade guide means. This has the advantage that the blade guide means can be adapted to the form of the blade.

In an embodiment of the invention at least one of the sub-platforms is divided in two sub-platform parts. This has the advantage that the sub-platform parts can be moved away from each other and the platform can be opened to allow the blade to enter the platform after entering of the blade the two sub-platforms parts can be closed and fixed together in a closed configuration.

In an embodiment of the invention the platform comprises catching fingers. The catching fingers protrude over the platform roughly in a direction towards the blade, however, pass sideways of the blade. When the platform is moved away from the tower, the catching fingers can be used to catch the blade and to guide the blade into the blade guide means.

In an embodiment of the invention the tower guide means comprise a bar arrangement having a variable length. When the length of the bar arrangement can be varied, it is possible to move the platform away from the tower once the platform has reached the desired position.

In an embodiment of the invention the platform is arranged above the bar arrangement in direction of gravity. This minimizes the risk of an unwanted tilting of the platform.

In an embodiment of the invention the bar arrangement is retractable into a platform space. A platform space is a space extending from the platform in the direction of gravity and having a section corresponding to the form of the platform. When the bar arrangement can be retracted into this platform space, the platform can simply be balanced without having masses which are positioned in a disadvantageous position. The bar arrangement can be retracted into a space below the platform, into a space inside the platform or even into a space above the platform.

In an embodiment of the invention the bar arrangement comprises at least one telescopic bar. A telescopic bar can change the length by shifting one element into another element. This saves space.

In an embodiment of the invention the bar arrangement comprises two bars. An arrangement of two bars has the advantage that the platform can be supported at the tower at two points. Thus, a lateral movement of the platform can be avoided or at least controlled.

In an embodiment of the invention an angle between the two bars is adjustable. This is of advantage when the bars are connected to the sub-platforms which are moved relatively to each other to adjust an open configuration of the platform. Such an adjustment is not blocked by the bars.

In another embodiment of the invention the bar arrangement comprises a single bar having an enlargement at an end near the tower. The single bar can be supported at the tower with the enlargement, so that even in this case a stable position of the bar can be achieved.

In an embodiment of the invention an angular orientation of the platform with respect to the tower guide means is adjustable. In many cases the blade is twisted. When the angular orientation of the platform with respect to the tower guide means is adjustable, it can catch the blade more or less at any desired position. The blade guide means can be moved into contact with the blade, so that the platform can be moved along the blade without damaging the blade.

The enclosure can be connected to the sub-platform parts, which has the advantage that the enclosure can be opened when the sub-platform parts are moved away from each other and the enclosure can be closed when the sub-platforms parts are moved towards each other.

The enclosure may furthermore comprise a sealing toward the blade, this sealing may be an integrated part of the enclosure or a separate part of the enclosure. The sealing might be in form of a sheet that can be connected to the blade.

The invention will now be described in more detail with reference to the drawing, in which:
- Fig. 1: shows a blade access arrangement upon start,
- Fig. 2: the blade access arrangement in a second step of operation,
- Fig. 3: the blade access arrangement in a third step of operation,
- Fig. 4: the blade access arrangement in a fourth step of operation,
- Fig. 5: the blade access arrangement in a fifth step of operation,
- Fig. 6: the blade access of the blade access arrangement in a top view,
- Fig. 7: the blade access of another embodiment of the blade access arrangement,
- Fig, 8: the blade access arrangement in an embodiment with enclosure and in an open configuration,
- Fig. 9: the blade access arrangement according to fig. 8 in a view seen toward the tower,
- Fig, 10: the blade access arrangement in an embodiment with enclosure and in a closed configuration and
- Fig. 11: the blade access arrangement according to fig. 10 in a view seen toward the tower.

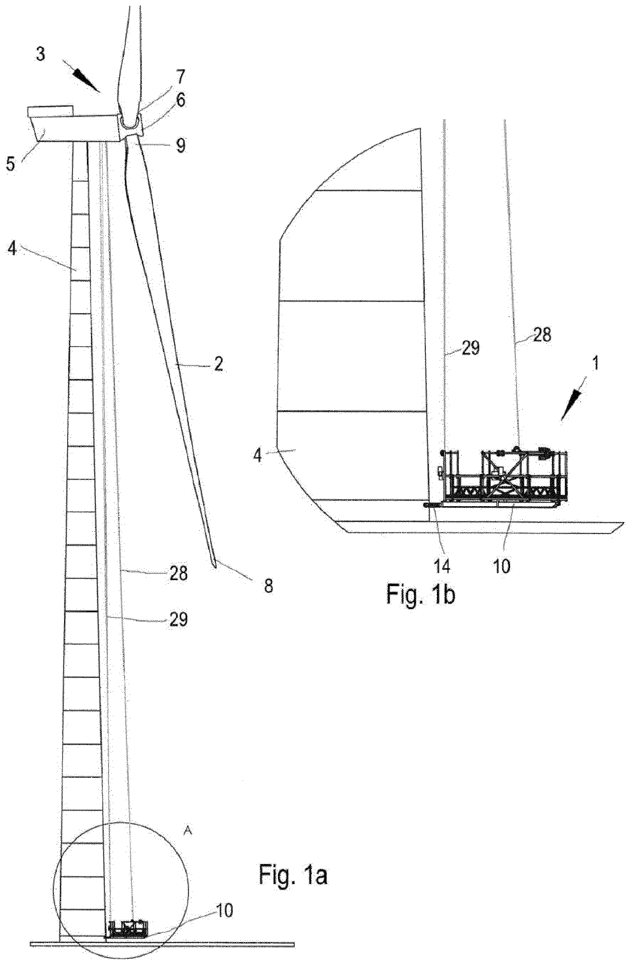

Fig. 1 shows a blade access arrangement 1 for a rotor blade 2 of a wind power plant 3. The wind power plant 3 is also briefly termed "wind mill". The wind power plant 3 has a tower 4. A nacelle 5 is arranged on top of the tower. The blade 2 is fixed to a hub 6 of a rotor 7 which is rotatably supported in the nacelle 5.

It can be seen in Fig. 1, that a tip 8 of the blade 3 has a larger distance to the tower than a root 9 of the blade. This makes access of the blade 2 difficult. However, access is necessary, for example for inspection, maintenance and repair of the blade 2.

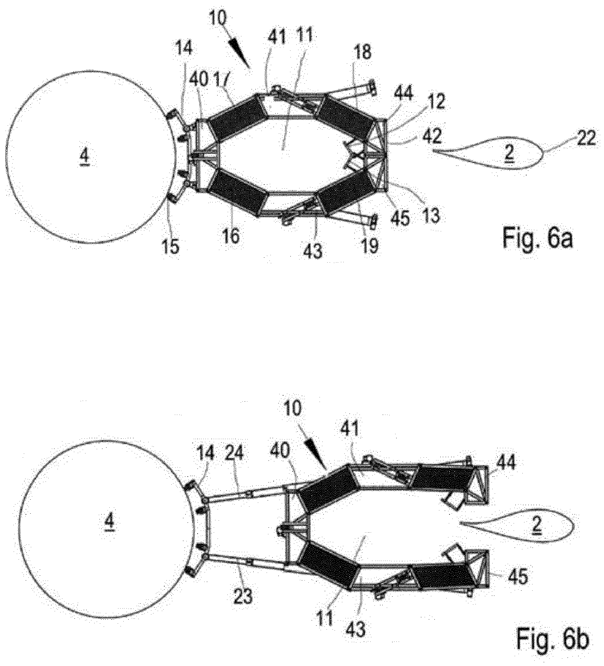

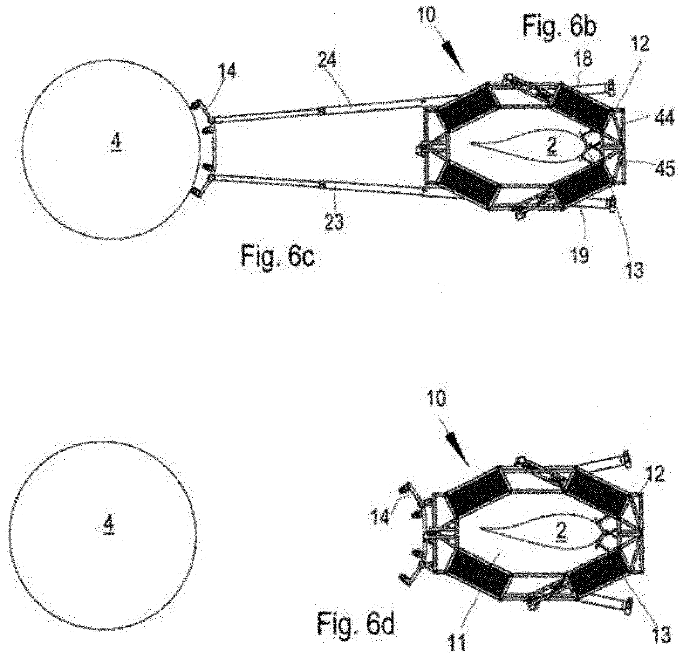

The access is made possible by means of the blade access arrangement 1. The blade access arrangement 1 is described in more detail with reference to Fig. 6. Fig. 6 shows a sectional view of the tower 4 and a sectional view of the blade 2 and in addition the blade access arrangement 1 from above.

The blade access arrangement 1 comprises a platform 10 having blade guide means which are roughly spoken formed at the opening 11 in the platform 10. Guiding elements 12, 13 shown schematically can be provided. These guiding elements 12, 13 can comprise rollers which can be pivoted with respect to the platform 10. Such guiding elements 12, 13 can be arranged around the circumference of the opening 11.

The platform 10 is connected to tower guide means 14 which rest against the tower 4. The tower guide means 14 can be provided with rollers so that the tower guide means can guide the platform 10 along the tower 4.

The platform 10 is adjustable in a closed position, which is shown in Fig. 6a, 6c, and 6d, and in an open configuration, which is shown in Fig. 6b.

To this end, the platform 10 comprises at least two sub-platforms 40, 41, 42, 43, and a linking system 16, 17, 18, 19 linking the sub-platforms 40, 41, 42, 43, together. The sub-platform 42 can be divided in two sub-platform parts 44, 45. The linking system 16, 17, 18, 19 comprises actuators (more actuators can be provided, however, not shown) to make it possible that the sub-platform part 44 can be moved with respect to the sub-platform 41 and the sub-platform part 45 can be moved with respect to the sub-platform 43. Thus, when the sub-platforms parts 44, 45 are moved away from each other, the opening 11 is opened to allow that the blade 2 enters the platform 10 and is accommodated in the opening 11, as shown in Fig. 6c.

The linking system 16, 17, 18, 19 forms connections between the sub-platforms 40, 41, 42, 43 which keep an angle between the sub-platforms 40, 41, 42, 43 constant during movement. This is achieved by connecting the sub-platforms by rods (not shown) to form a parallelogram. This parallelogram is covered by a decking.

As can be seen in Fig. 6c and 6d, the guiding means 12, 13, are connected to the sub-platform parts 44, 45. The blade guiding means 12, 13 have contact to a leading edge 22 of the blade 2 so that the platform 10 can be guided along the leading edge 22 of the blade 2.

The tower guide means 14 are connected to the platform 10 by means of a bar arrangement which has, in the embodiment shown in Fig. 6, two bars 23, 24 which have a variable length. This is realized by the fact that the bars 23, 24 are telescopic bars.

An angle between the two bars 23, 24 is variable. It can be adjusted, wherein the adjustment is made by varying the distance of the platform 10 from the tower 4.

When the bars 23, 24 are extended, the platform 10 is shifted towards the blade 2. Once the blade 2 is accommodated in the opening 11 and the guiding elements 12, 13 can come into contact with the leading edge 22 of the blade 2, the bars 23, 24 can be retracted in a space below the platform 10 or into the platform 10. This makes it easier to balance out the platform 10 in a working position. Furthermore, it makes the platform position around the blade independent on the distance between the tower and the blade.

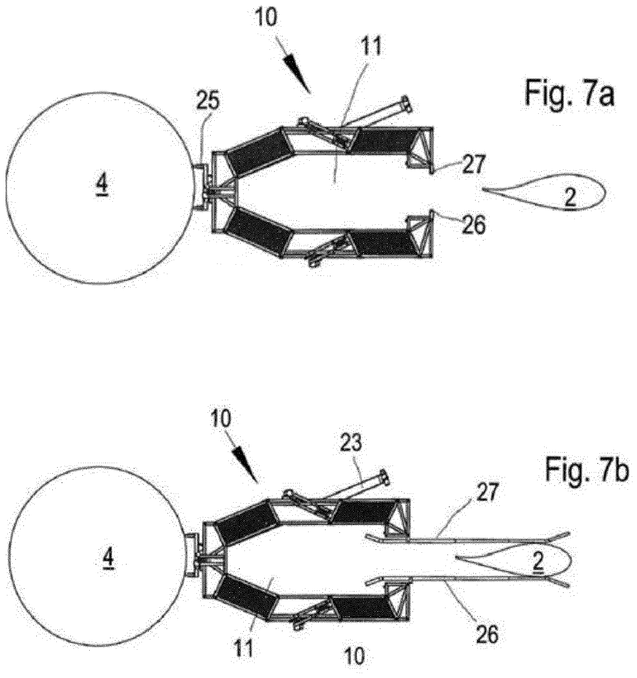

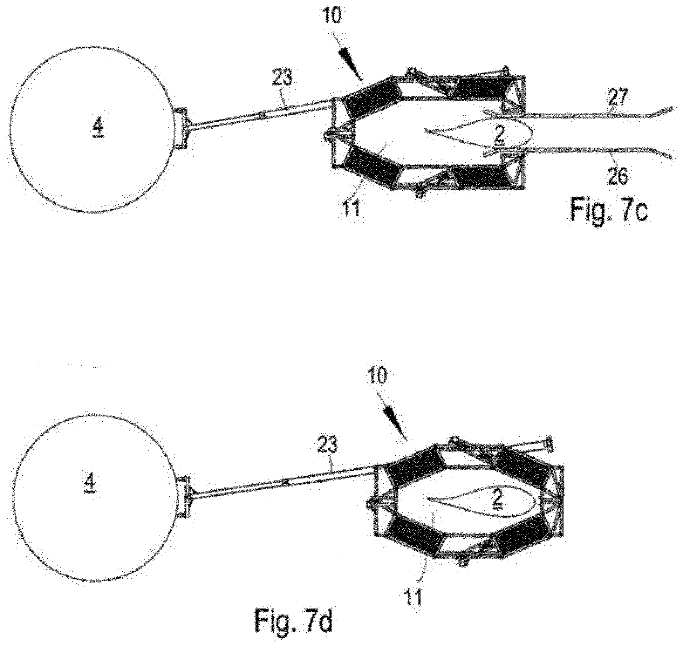

Fig. 7 shows another embodiment, in which only a single bar 23 is provided. The single bar 23 has an enlargement 25 at an end near the tower 4, so that it can rest against the tower 4 in a stable position.

In addition, the platform 10 comprises catching fingers 26, 27 which can be moved from an upright position (Fig. 7a) into a horizontal position (Fig. 7b and 7c) and which facilitates the guiding of the platform 10 over the blade 2. Once the blade 2 is accommodated in the opening 11, the catching fingers 26, 27 can be moved back into the upright position.

It should be noted that the bar 23 can and will be retracted into or below the platform 10 once the desired position is achieved and the platform 10 is guided by the blade 2. Furthermore, it should be noted that the catching fingers 26, 27 can be used as well in the embodiment shown in Fig. 6.

The operation of the blade access arrangement is illustrated in connection with Fig. 1 to 5.

Fig. 1 shows the blade access arrangement 1 in a starting position, in which the platform 10 is near ground. The platform 10 is suspended by three wire ropes 28, 29 from the nacelle 5. Only two of the wire ropes are visible, because one of the wire ropes is located behind the wire rope 28. Usually there are three suspension points, each represented by an electric powered wire rope hoist attached to the platform 10, more precisely to some of the sub-platforms 40-43. The platform is intended for providing access to the blade 2. Fig. 1b shows a detail A of Fig. 1a.

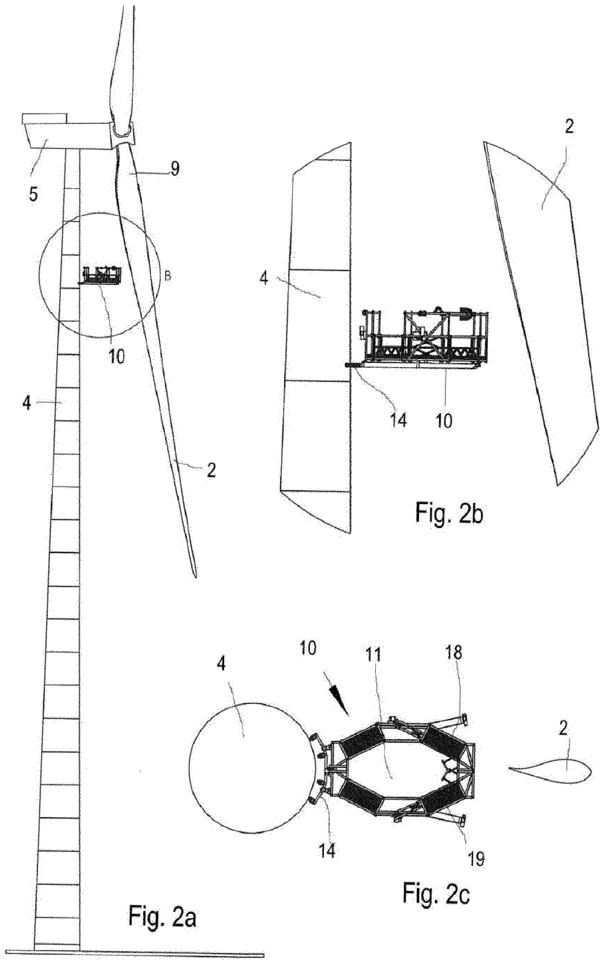

Fig. 2 shows the situation in which the platform 10 has been lifted towards the nacelle 5. The ropes 28, 29 are no longer shown. However, it can be seen that the platform 10 is lifted to a position in which the platform 10 is close to the blade 2. This means that the platform was lifted near to the root 9 of the blade 2.

Fig. 2b shows a detail B of Fig. 2a. Fig. 2c shows a top view of Fig. 2b, wherein the blade 2 and the tower 4 are shown in cross section.

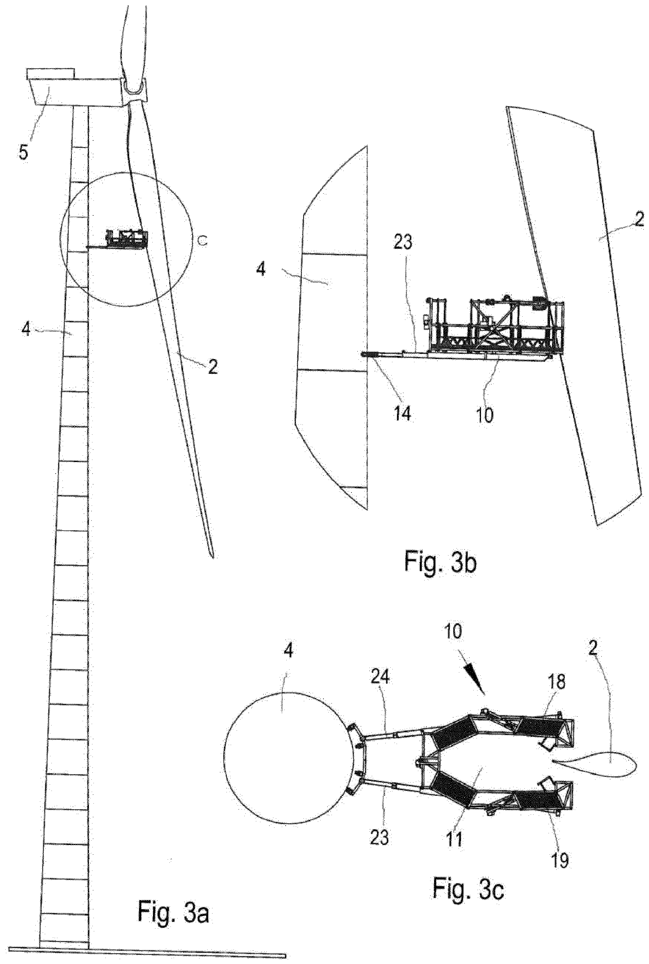

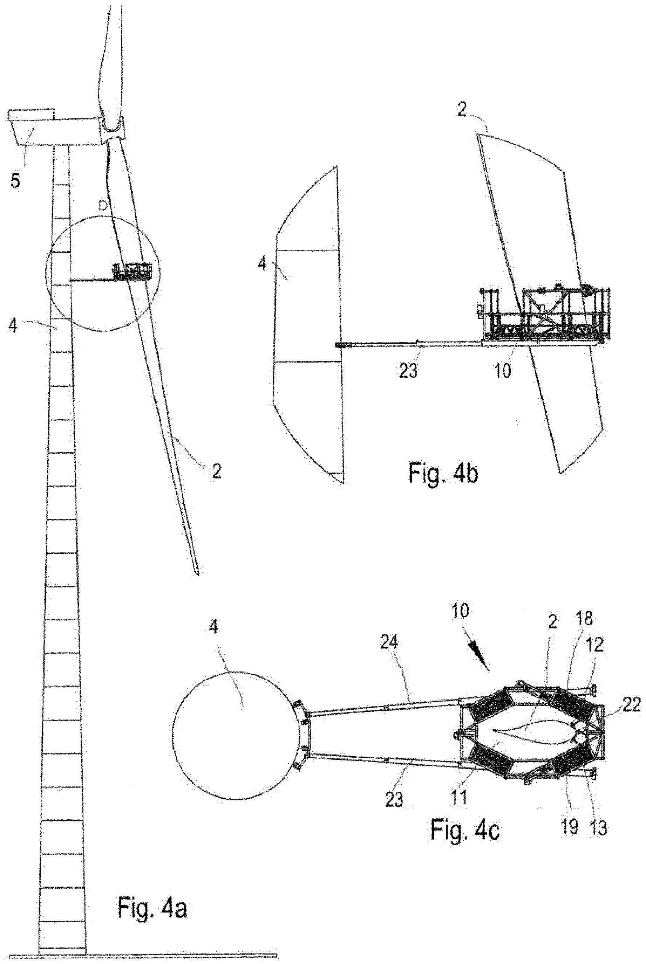

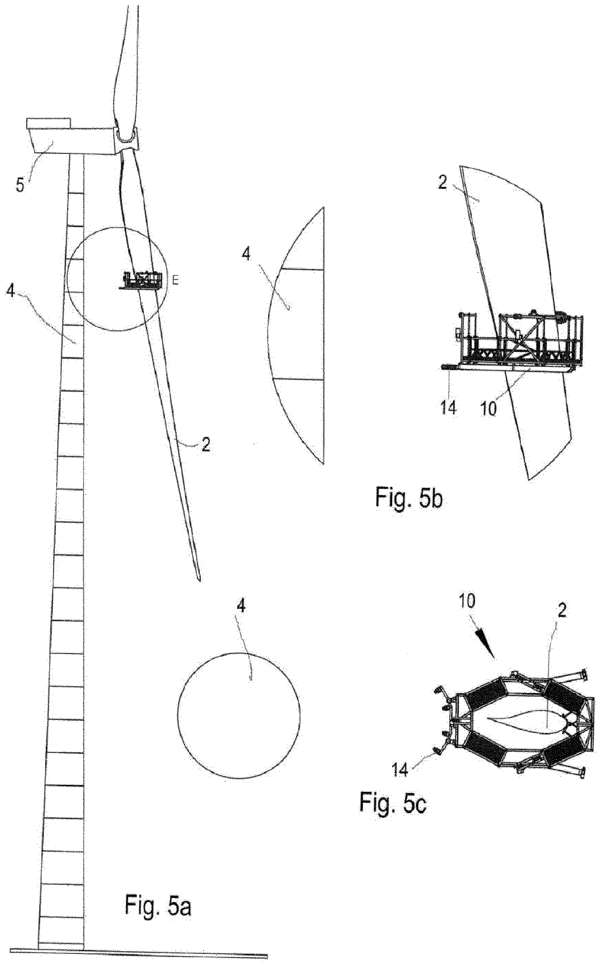

Fig. 3 shows a situation in which the platform 10 approaches the blade 2. Again, the ropes 28, 29 are no longer shown. To this end, the bars 23, 24 are extended. Upon this extension the platform 10 is pushed away from the tower 4 and approaches the blade 2. During this movement (or before the movement) the platform 10 has been changed from a closed configuration (Fig. 2c) into an open configuration (Fig. 3c) so that an opening 11 of the platform 10 is open to the blade 2. To this end, the two sub-platform parts 44, 45 have been moved away from each other. As soon as the open configuration has been adjusted, the platform 10 can be shifted to catch the blade 2 and then be adjusted again in closed configuration (Fig. 4c) wherein the blade 2 is accommodated within the opening 11 and the guiding elements 12, 13 rest against the leading edge 22 of the blade 2. In this situation the platform 10 is guided at the tower 4 and at the blade 2. Such a double guiding is in principle not necessary, so that in a further step the tower guide means 14 are retracted by shortening the bars 23, 24 so that finally a situation as shown in Fig. 5c is reached.

It should be mentioned that the sub-platform parts 44, 45 are fixed together in the closed configuration by means of a suitable locking system. In the transition from closed configuration to open configuration of the platform 10 the lock is disengaged and one or several of the linkage systems 16-19 are independently controlled to create a space or an opening between the two previously fixed together sub-platform parts 44, 45. Once the blade 2 guides the platform 10, the platform 10 can be lowered in a direction to the tip 8 of the blade or raised in the opposite direction, so that the whole blade 2 can be inspected, maintained, or repaired. Thus, the blade access arrangement 1 combines the advantages of a tower guided system with the advantages of a blade guided system. However, the access to the blade 2 is made simpler and the platform 10 or working plane can be kept stable in all positions.

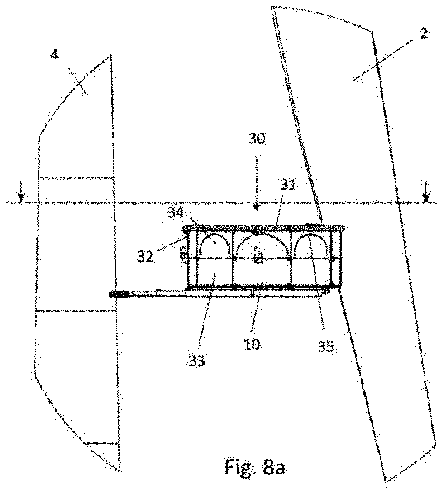

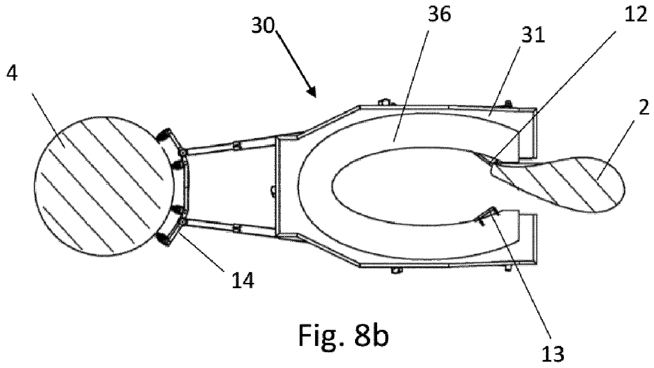

Figures 8-11 shows an embodiment of the blade access arrangement with an enclosure 30. The enclosure encloses the platform 10 in the shown embodiment the enclosure comprises a number of side walls 32 which substantially surround the circumference of a blade 2 in need of maintenance and a roof 31 extending from said side walls towards said blade 2.

The side walls 32 can be divided into several segments. The side walls are here divided into a balustrade segment 33 and a top segment 34 the top segment comprises windows 35 that can be opened. The roof comprises a flexible sealing 36 that can seal against the blade 2 when the blade access arrangement is placed in the wished working position. The segments allow the platform to be fully enclosed or only partly enclosed.

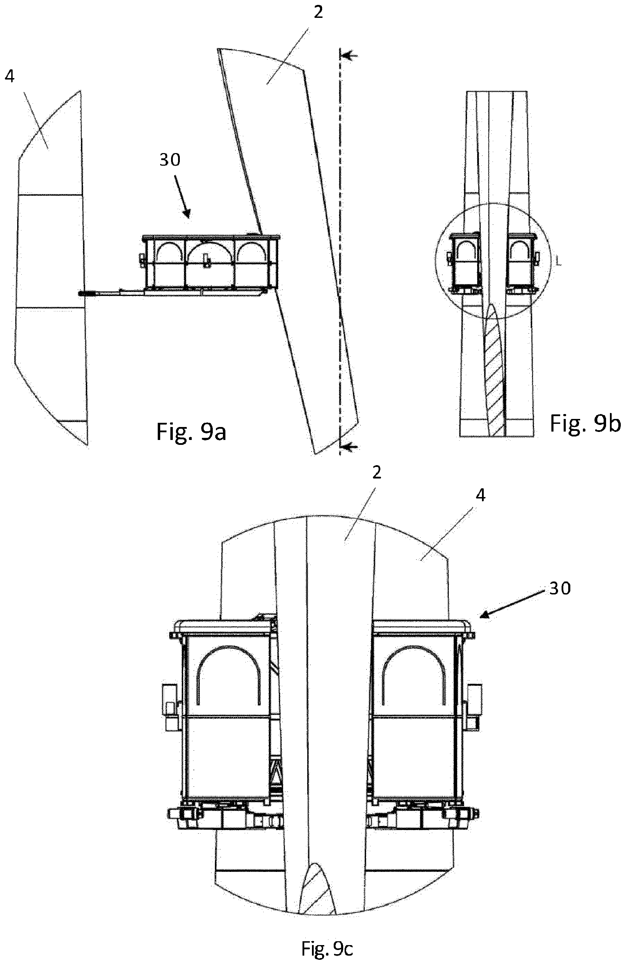

Fig. 8 and fig. 9 shows a situation in which the blade access arrangement is in an open configuration where the platform approaches the blade 2 the enclosure 30 is here open for receiving the blade. The blade guiding elements 12, 13 are open and visible, not covered by the enclosure, in figure 8b. Fig. 8b shows a top view of fig. 8a.

Fig. 9 shows the same situation as in fig. 8 but here shown from a view towards the tower 4. Both platform 10 and enclosure 30 are in an open configuration.

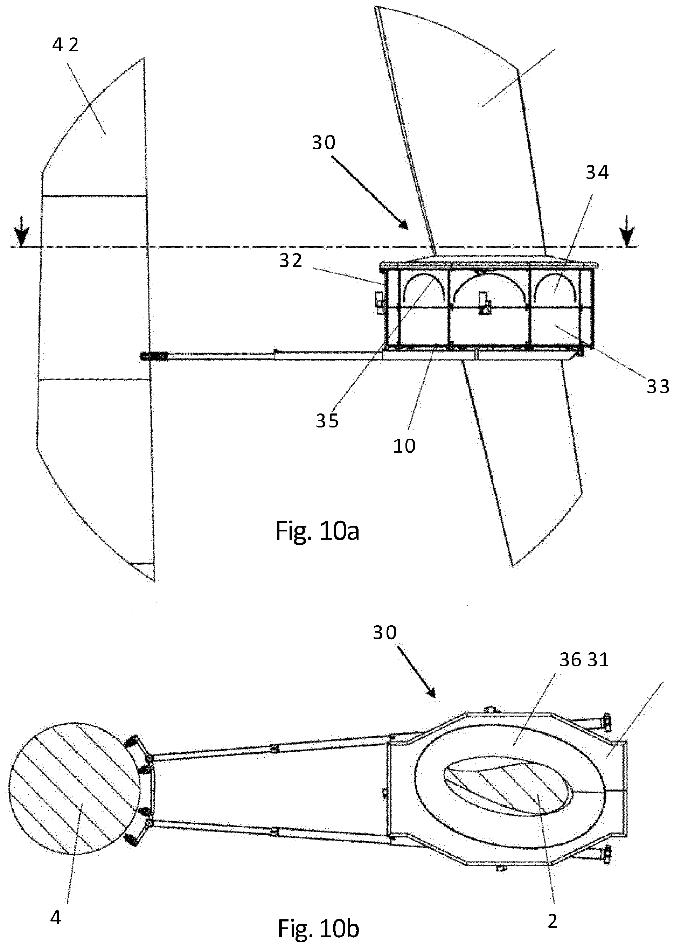

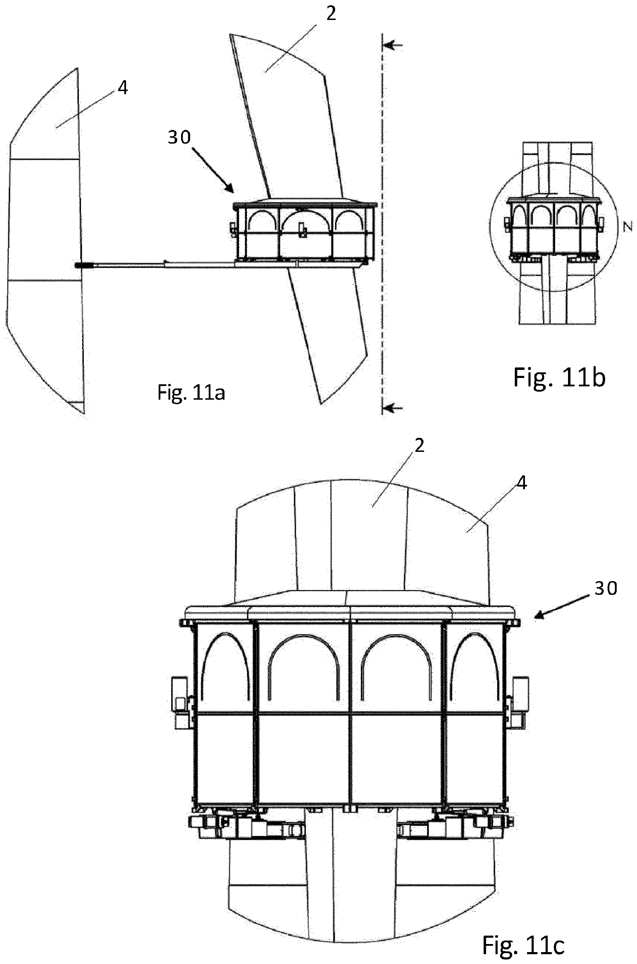

Fig. 10 and fig. 11 shows a situation in which the blade access arrangement is in a closed configuration where the blade 2 is accommodated within the opening and the blade guiding elements of the platform approaches the blade 2 the enclosure 30 is here closed. The blade guiding elements (not visible covered by the enclosure) rest again the leading edge of the blade 2 in this situation the platform 10 is guided at the tower 4 and at the blade 2. Fig. 10b shows a top view of fig. 10a. The flexible sealing 36 is here only partly sealing against the blade 2.

Fig. 11 shows the same situation as in fig. 10 but here shown from a view towards the tower 4. Both platform 10 and enclosure 30 are in a closed configuration.

## Claims

1. Blade access arrangement (1) for a rotor blade (2) of a wind power plant (3) having a tower (4), the arrangement (1) comprising a platform (10) having blade guide means (12, 13) for guiding the platform against the blade and tower guide means (14) for guiding the platform (10) against the tower (4), wherein the platform (10) is adjustable in an open configuration, in which the blade (2) can enter the blade guide means (12, 13), and in a closed configuration, in which the platform (10) is guided by the blade (2), wherein the platform (10) comprises at least two sub-platforms (40, 41, 42, 43) and a linking system (16, 17, 18, 19) linking the sub-platforms (40, 41, 42, 43) together, **characterized in that** the platform (10) comprises an enclosure (30) connected to the sub-platforms (40, 41, 42, 43).

2. Blade access arrangement according to claim 1, **characterized in that** the sub-platforms (40, 41, 42, 43) are movable with respect to each other keeping an angle between the sub-platforms (40, 41, 42, 43) constant.

3. Blade access arrangement according to claim 1 or 2, **characterized in that** at least one of the sub-platforms (40, 41, 42, 43) forms a part of the blade guide means.

4. Blade access arrangement according to any of claims 1 to 3, **characterized in that** at least one of the sub-platforms (40, 41, 42, 43) is divided in two sub-platform parts (44, 45).

5. Blade access arrangement according to any of claims 1 to 4, **characterized in that** the platform (10) comprises catching fingers (26, 27).

6. Blade access arrangement according to any of claims 1 to 5, **characterized in that** the tower guide means comprise (14) a bar arrangement (23, 24) having a variable length.

7. Blade access arrangement according to claim 6, **characterized in that** the platform (10) is arranged above the bar arrangement (23, 24) in direction of gravity.

8. Blade access arrangement according to claim 6 or 7, **characterized in that** the bar arrangement (23, 24) is retractable into a platform space.

9. Blade access arrangement according to any of claims 6 to 8, **characterized in that** the bar arrangement (23, 24) comprises at least one telescopic bar.

10. Blade access arrangement according to any of claims 6 to 9, **characterized in that** the bar arrangement (23, 24) comprises two bars.

11. Blade access arrangement according to claim 10, **characterized in that** an angle between the two bars is adjustable.

12. Blade access arrangement according to any of claims 6 to 9, **characterized in that** the bar arrangement (23, 24) comprises a single bar having an enlargement (25) at an end near the tower.

13. Blade access arrangement according to any of claims 1 to 12, **characterized in that** an angular orientation of the platform (10) with respect to the tower guide means (14) is adjustable.

14. Blade access arrangement according to any of claims 1 to 13, **characterized in that** the blade guide means (12, 13) comprise rollers the position of which on the platform (10) is adjustable.

15. Blade access arrangement according to any of claims 4 to 14, **characterized in that** the enclosure (30) is connected to the sub-platform parts (44, 45).

## Patentansprüche

1. Schaufelzugangsanordnung (1) für ein Rotorblatt (2) einer Windenergieanlage (3) mit einem Turm (4), wobei die Anordnung (1) eine Plattform (10) mit Blattführungsmitteln (12, 13) zum Führen der Plattform gegen das Blatt und Turmführungsmitteln (14) zum Führen der Plattform (10) gegen den Turm (4) aufweist, wobei die Plattform (10) in einer offenen Konfiguration, in der das Blatt (2) in die Blattführungsmittel (12, 13) eintreten kann, und in einer geschlossenen Konfiguration, in der die Plattform (10) von der Schaufel (2) geführt wird, wobei die Plattform (10) mindestens zwei Unterplattformen (40, 41, 42, 43) und ein Verbindungssystem (16, 17, 18, 19) aufweist, das die Unterplattformen (40, 41, 42, 43) miteinander verbindet, **dadurch gekennzeichnet, dass** die Plattform (10) ein Gehäuse (30) aufweist, das mit den Unterplattformen (40, 41, 42, 43) verbunden ist.

2. Schaufelzugangsanordnung nach Anspruch 1, **dadurch gekennzeichnet, dass** die Unterplattformen (40, 41, 42, 43) gegeneinander beweglich sind, wobei ein Winkel zwischen den Unterplattformen (40, 41, 42, 43) konstant gehalten wird.

3. Schaufelzugangsanordnung nach Unterplattformen 1 oder 2, **dadurch gekennzeichnet, dass** mindestens eine der Unterplattformen (40, 41, 42, 43) einen Teil der Blattführungsmittel bildet.

4. Schaufelzugangsanordnung nach einem der Ansprüche 1 bis 3, **dadurch gekennzeichnet, dass** mindestens eine der Unterplattformen (40, 41, 42, 43) in zwei Unterplattformteile (44, 45) unterteilt ist.

5. Schaufelzugangsanordnung nach einem der Ansprüche 1 bis 4, **dadurch gekennzeichnet, dass** die Plattform (10) Fangfinger (26, 27) aufweist.

6. Schaufelzugangsanordnung nach einem der Ansprüche 1 bis 5, **dadurch gekennzeichnet, dass** die Turmführungsmitteln (14) eine Stangenanordnung (23, 24) mit variabler Länge aufweist.

7. Schaufelzugangsanordnung nach Anspruch 6, **dadurch gekennzeichnet, dass** die Plattform (10) in Schwerkraftrichtung oberhalb der Stangenanordnung (23, 24) angeordnet ist.

8. Schaufelzugangsanordnung nach Anspruch 6 oder 7, **dadurch gekennzeichnet, dass** die Stangenanordnung (23, 24) in einen Plattformraum einziehbar ist.

9. Schaufelzugangsanordnung nach einem der Ansprüche 6 bis 8, **dadurch gekennzeichnet, dass** die Stangenanordnung (23, 24) mindestens eine Teleskopstange aufweist.

10. Schaufelzugangsanordnung nach einem der Ansprüche 6 bis 9, **dadurch gekennzeichnet, dass** die Stangenanordnung (23, 24) zwei Stangen aufweist.

11. Schaufelzugangsanordnung nach Anspruch 10, **dadurch gekennzeichnet, dass** ein Winkel zwischen den beiden Stangen einstellbar ist.

12. Schaufelzugangsanordnung nach einem der Ansprüche 6 bis 9, **dadurch gekennzeichnet, dass** die Stangenanordnung (23, 24) eine einzelne Stange aufweist, die an einem turmnahen Ende eine Erweiterung (25) aufweist.

13. Schaufelzugangsanordnung nach einem der Ansprüche 1 bis 12, **dadurch gekennzeichnet, dass** eine Winkelausrichtung der Plattform (10) in Bezug auf die Turmführungseinrichtung (14) einstellbar ist.

14. Schaufelzugangsanordnung nach einem der Ansprüche 1 bis 13, **dadurch gekennzeichnet, dass** die Blattführungsmittel (12, 13) Rollen aufweisen, deren Position auf der Plattform (10) einstellbar ist.

15. Schaufelzugangsanordnung nach einem der Ansprüche 4 bis 14, **dadurch gekennzeichnet, dass** die Gehäuse (30) mit den Unterplattformteilen (44, 45) verbunden ist.

## Revendications

1. Agencement d'accès à une pale (1) pour une pale de rotor (2) d'une centrale éolienne (3) ayant une tour (4), l'agencement (1) comprenant une plateforme (10) ayant des moyens de guidage de pale (12, 13) pour guider la plateforme contre la pale et des moyens de guidage de tour (14) pour guider la plateforme (10) contre la tour (4), dans lequel la plateforme (10) est réglable dans une configuration ouverte, dans laquelle la pale (2) peut entrer dans les moyens de guidage de pale (12, 13), et dans une configuration fermée, dans laquelle la plateforme (10) est guidée par la pale (2), dans lequel la plateforme (10) comprend au moins deux sous-plateformes (40, 41, 42, 43) et un système de liaison (16, 17, 18, 19) reliant les sous-plateformes (40, 41, 42, 43) entre elles, **caractérisé en ce que** la plateforme (10) comprend une enceinte (30) raccordée aux sous-plateformes (40, 41, 42, 43).

2. Agencement d'accès à une pale selon la revendication 1, **caractérisé en ce que** les sous-plateformes (40, 41, 42, 43) sont mobiles l'une par rapport à l'autre en maintenant un angle constant entre les sous-plateformes (40, 41, 42, 43).

3. Agencement d'accès à une pale selon la revendication 1 ou 2, **caractérisé en ce qu'**au moins l'une des sous-plateformes (40, 41, 42, 43) fait partie des moyens de guidage de pale.

4. Agencement d'accès à une pale selon l'une des revendications 1 à 3, **caractérisé en ce qu'**au moins l'une des sous-plateformes (40, 41, 42, 43) est divisée en deux parties de sous-plateforme (44, 45).

5. Agencement d'accès à une pale selon l'une des revendications 1 à 4, **caractérisé en ce que** la plateforme (10) comprend des doigts d'accrochage (26, 27).

6. Agencement d'accès à une pale selon l'une des revendications 1 à 5, **caractérisé en ce que** les moyens de guidage de tour (14) comprennent un agencement de barres (23, 24) ayant une longueur variable.

7. Agencement d'accès à une pale selon la revendication 6, **caractérisé en ce que** la plateforme (10) est agencée au-dessus de l'agencement de barres (23, 24) dans le sens de la gravité.

8. Agencement d'accès à une pale selon la revendication 6 ou 7, **caractérisé en ce que** l'agencement de barres (23, 24) est rétractable dans un espace de plateforme.

9. Agencement d'accès à une pale selon l'une des revendications 6 à 8, **caractérisé en ce que** l'agencement de barres (23, 24) comprend au moins une barre télescopique.

10. Agencement d'accès à une pale selon l'une des revendications 6 à 9, **caractérisé en ce que** l'agencement de barres (23, 24) comprend deux barres.

11. Agencement d'accès à une pale selon la revendication 10, **caractérisé en ce qu'**un angle entre les deux barres est réglable.

12. Agencement d'accès à une pale selon l'une des revendications 6 à 9, **caractérisé en ce que** l'agencement de barres (23, 24) comprend une seule barre présentant un élargissement (25) au niveau d'une extrémité proche de la tour.

13. Agencement d'accès à une pale selon l'une des revendications 1 à 12, **caractérisé en ce qu'**une orientation angulaire de la plateforme (10) par rapport aux moyens de guidage de tour (14) est réglable.

14. Agencement d'accès à une pale selon l'une des revendications 1 à 13, **caractérisé en ce que** les moyens de guidage de pale (12, 13) comprennent des rouleaux dont la position sur la plateforme (10) est réglable.

15. Agencement d'accès à une pale selon l'une des revendications 4 à 14, **caractérisé en ce que** l'enceinte (30) est raccordée aux parties de sous-plateforme (44, 45).
